(19) Europäisches Patentamt
European Patent Office
Office européen des brevets

(11) **EP 4 393 584 A1**

(12) **EUROPEAN PATENT APPLICATION**

(43) Date of publication:
**03.07.2024 Bulletin 2024/27**

(21) Application number: **22217235.5**

(22) Date of filing: **29.12.2022**

(51) International Patent Classification (IPC):
**B01J 20/04** (2006.01)     **B01J 20/06** (2006.01)
**B01J 20/08** (2006.01)     **B01J 20/30** (2006.01)
**B01J 20/28** (2006.01)     **C02F 1/28** (2023.01)
**C02F 1/52** (2023.01)     **C02F 11/00** (2006.01)
**C02F 11/145** (2019.01)     **C02F 101/10** (2006.01)
**B09B 3/00** (2022.01)

(52) Cooperative Patent Classification (CPC):
**B01J 20/043; B01J 20/06; B01J 20/08;**
**B01J 20/28078; B01J 20/3085; B09B 3/40;**
**B09B 3/70; C02F 1/288;** B01J 2220/42;
B01J 2220/4887; B09B 2101/30; B09B 2101/90;
C02F 1/281; C02F 1/5245; C02F 11/145;     (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **VITO NV**
**2400 Mol (BE)**

(72) Inventors:
• **MICHIELSEN, Bart**
**2400 Mol (BE)**
• **BERGMANS, Jef**
**2400 Mol (BE)**
• **QUAGHEBEUR, Mieke**
**2400 Mol (BE)**

(74) Representative: **AWA Benelux**
**AWA Benelux SA**
**Tour & Taxis - Royal Depot box:216**
**Havenlaan 86c Avenue du Port**
**1000 Bruxelles (BE)**

(54) **METHOD OF PREPARING A SORBENT MATERIAL BY CARBONATION**

(57)     Method of preparing a sorbent material, (i) obtaining a particulate material comprising a source of oxides and/or hydroxides of at least one metal element and a source of ions of at least one alkaline earth metal element, and (ii) reacting the particulate material with an atmosphere comprising carbon dioxide in the presence of water to form carbonates of at least one alkaline earth metal element, thereby obtaining the sorbent material, such that a difference in total inorganic carbon content of the sorbent material with respect to the particulate material is at least 0.5%. The at least one metal element is at least one element selected from any one of group 4, 7, 8, 13 and 14 of the periodic table. The particulate material comprises at least 20% by dry weight of the at least one metal element and at least 5% by dry weight of the at least one alkaline earth metal element. The sorbent material comprises oxides and/or hydroxides of at least one metal element and a total inorganic carbon content of at least 0.5% by weight.

FIG 7B

(52) Cooperative Patent Classification (CPC): (Cont.)
     C02F 2101/105

## Description

## Technical field

The present invention is related to methods of preparing a sorbent material, particularly for sorption of phosphorus-based pollutants and the like, and to a sorbent material obtained therefrom.

## Background art

Over the past decades, the continuous progress and industrialization together with an exponential increase in population and civilization expansion have intensified nutrient use but also the uncontrolled release of nutrient at different ecosystem levels. An example of such uncontrolled release finds its origin in the use of phosphate containing fertilizers in agriculture to stimulate plant growth. Drainage water running off from such agricultural sites is usually rich in phosphates. Most of the released phosphorus enters into rivers, lakes or oceans causing eutrophication and algal blooms. This leads to the formation of so-called "dead zones" in aquatic systems where living organisms are not able to survive due to the lack of oxygen. This type of surface waters is no longer suitable for consumption or for combination with other water sources meant for consumption. In response to the strict regulations that are being put in place to control the discharge of phosphates into the environment, sorbent materials and installations which adsorb phosphate are being developed.

Since large amounts of sorbent materials are needed, they need to fulfil certain requirements not only in relation to production cost, but also in relation to mechanical stability, water permeability, attrition, toxicity and leaching of heavy metals sorbed therein, etc.

It is known that aluminium-rich and/or iron-rich materials are effective phosphate adsorbers. Iron-based sorbents show a higher sorption capacity than aluminium-based sorbents. To form stable iron-based sorbents, there is a need for one of the following: a thermal treatment on high temperature (>1000 °C), causing the material to lose most of its sorption capacity, a binder, or an effective support material. Often an organic binder is used, causing durability problems. In water applications, the binder will disintegrate in time by biological activity.

WO 2019/129767, 4 July 2019 discloses a method of manufacturing an oxide based sorbent material which comprises a first phase rich in iron oxides bound by a matrix rich in aluminum oxide. According to that method, a first granular material comprising iron and a second granular material comprising aluminum hydroxide are mixed in a proportion such that a ratio of iron (Fe) to aluminum (Al) is between 0.5 and 3.5 by weight, and the mixture is subjected to a thermal treatment at elevated temperatures between 400 and 950° C. The second granular material has an Al content comprised in aluminum hydroxide phases of at least 30% by weight. One disadvantage of the above method is that the thermal treatment, even if performed at lower temperatures, will still considerably reduce the sorption capacity. Furthermore, the thermal treatment renders this process energetically and economically unfavorable.

WO 2019/234066, 12 December 2019 discloses a method of producing a carbonate bonded article with a compressive strength of at least 5 MPa which is amongst others suitable for use as building blocks, or as compacts in recycling of steel dust. A mixed precursor is prepared comprising an aqueous source and a particulate metal source comprising at least 30 % of one or more transition and/or post-transition metals. The mixed precursor is shaped and caused to react with carbon dioxide at a temperature between 10°C and 150°C and a pressure of at least 1 bar. The carbon dioxide reacts with the aqueous source to form carbonate or bicarbonate ions. The one or more metals react with the carbonate or bicarbonate ions and form carbonates of the one or more metals thus transforming the shaped precursor into the carbonate bonded article. The carbonate bonded article so obtained is not suitable as a sorbent material since the available metals are bound as carbonates.

WO 2009/133120, 5 November 2009 discloses a method of producing a mainly carbonate bonded article, in which an alkaline granular material comprising one or more alkaline earth metal silicate phases is compacted at a pressure of at least 5 MPa to obtain a compact of the granular material and reacted with carbon dioxide in the presence of water to obtain the mainly carbonate bonded article. The granular material can further comprise oxides, hydroxides and/or silicates of one or more transition metals, such as Fe, Co, Mn, Ni and Cu. At least 5% by weight of carbonates ($CO_3{}^{2-}$) are formed. The reaction with carbon dioxide is carried out at a temperature of at least 70°C and a pressure of at least 0.5 MPa. At least a portion of the carbonates are formed by reaction of the one or more alkaline earth metal silicate phases. Due to compaction of the granular material, the compact end product has a limited porosity of maximum 37% by volume. The granular material mostly comprises a slag from iron processing, in which the metals have been removed. Such materials have typical Fe-content less than 1% by weight. As a result, the mainly carbonate bonded article would not be suitable as a sorbent material due to the absence of significant amounts of active sorptive elements.

## Summary

There is hence a need in the art to provide a method of preparing or manufacturing a sorbent material which has one or more of the following advantages over prior art sorbent materials: it is economical, it has a higher sorption capacity, particularly in aqueous environments, it has improved durability, e.g. showing reduced or no disintegration, having improved mechanical properties, such as compressive strength and has no adverse effects for the environment, e.g. reduced disintegration, no significant pH increase and reduced leaching of contaminants in aqueous environments.

According to a first aspect of the present disclosure, there is therefore provided a method of preparing a sorbent material as set out in the appended claims. A particulate material is obtained, comprising a source of oxides and/or hydroxides of at least one metal element and a source of ions of at least one alkaline earth metal element. The particulate material comprises at least 20% by dry weight of the at least one metal element and at least 5% by dry weight of the at least one alkaline earth metal element. The at least one metal element is at least one element selected from any one of group 4, 7, 8, 13 and 14 of the periodic table, advantageously Fe, Al, Mn, Ti and Zr. The particulate material is reacted with a first atmosphere comprising carbon dioxide in the presence of water to form carbonates of the at least one alkaline earth metal element. The first atmosphere can be air, but is advantageously an atmosphere enriched in carbon dioxide, such as comprising at least 1 vol.%, at least 2 vol.%, or at least 5 vol.% carbon dioxide. The carbonates provide bonding of the particulate material thereby obtaining the sorbent material. Specifically, according to aspects of the present disclosure at least 0.5% by weight inorganic carbon is advantageously formed during the carbonation reaction, advantageously at least 1% by weight, advantageously at least 1.2% by weight, advantageously at least 1.5% by weight. This additional inorganic carbon content refers to a difference between the total inorganic carbon content of the particulate material (before carbonation reaction and possible drying) and the total inorganic carbon content of the sorbent material obtained.

The sorbent material is advantageously a granular material and advantageously comprises at least 50% by mole of the oxides and/or hydroxides of the at least one metal element present in the particulate material, advantageously at least 60% by mole, advantageously at least 70% by mole.

Methods according to the present disclosure allow to obtain a sorbent material having a beneficial structure which includes carbonates of alkaline earth metal elements as binding phase to impart sufficient strength to the sorbent material. As a result, thermal treatments, e.g. at temperatures higher than 150°C, or higher than 200°C, which reduce the sorption capacity of the sorptive elements can be avoided, and are advantageously not applied in present methods.

The obtained strength through carbonation is advantageously sufficient to obtain a reduced attrition risk when the sorbent is utilized in a granular shape, as it avoids filter clogging when the sorbent is used in a packed column or when positioned on a meshed material. Furthermore, compaction of the granular material prior to carbonation is advantageously dispensed with. As a result, porosity is not removed by compaction of the particulate material which is brought to reaction, allowing optimal access to internal adsorption sites.

Furthermore, due to the presence of the alkaline earth metal elements, a carbonation with such elements is favoured over carbonation of the metal elements, such that the metal elements are advantageously maintained in the sorbent material as oxides and/or hydroxides, contributing as sorptive elements. Hence, sorbent materials prepared according to the methods of the present disclosure advantageously show high or at least improved sorption capacity.

Advantageously, the particulate material is reacted with carbon dioxide at a temperature of 150°C or less, advantageously 120°C or less, advantageously a temperature of 90°C or less, such as a temperature between 30°C and 90°C, or between 40°C and 80°C, or between 49°C and 75°C.

Advantageously, the particulate material is reacted with carbon dioxide at a pressure which is at least atmospheric pressure, such as a pressure of at least 0.1 MPa gauge pressure, at least 0.25 MPa gauge pressure, or at least 0.5 MPa gauge pressure.

Advantageously, the particulate material is dried, advantageously in a second atmosphere comprising carbon dioxide, e.g. air, possibly at ambient temperature, or slightly elevated temperature, e.g. a temperature of at least 30°C, such as between 30°C and 60°C, or between 30°C and 45°C. Thereby, the moisture (water) content of the particulate material is advantageously reduced to 40% by total weight or less, advantageously 35% or less. In some examples, the moisture content of the particulate material may be reduced from about 70% to 80% to about 40% to 30% by total weight, e.g. a reduction by about 50% to 30%. Advantageously, drying of the particulate material at the above conditions, particularly in the second atmosphere, allows to form initial carbonates of at least one alkaline earth metal element. The particulate material is advantageously reacted with the carbon dioxide containing first atmosphere, as indicated in the previous paragraphs, following or during the drying of the particulate material, advantageously at the indicated moisture content levels. This allows to form additional carbonates as indicated.

Advantageously, the particulate material comprises or substantially consists of a sludge material. A sludge material is typically obtained by adding a coagulation agent to water. The coagulation agent comprises the at least one metal element, e.g. as a salt of the at least one metal element. The coagulation agent advantageously forms a coagulation product or a precipitation product in the water. The coagulation (or precipitation) product comprises the oxides and/or hydroxides of the at least one metal element. Possibly, oxides and/or hydroxides of the at least one alkaline earth metal element are added to the water and hence are included in the coagulation (or precipitation) product. These oxides and/or hydroxides of the at least one alkaline earth metal element advantageously form the source of ions of the at least one alkaline earth metal element for the carbonation reaction. The coagulation (or precipitation) product, possibly comprising the oxides and/or hydroxides of the at least one alkaline earth metal element, is removed or separated from the water to obtain an aggregated material. The aggregated material can be at least partially dried and can be broken or comminuted to reduce aggregate size. The aggregated material is advantageously utilized as at least a fraction of the particulate material.

Advantageously, the particulate material comprises or consists of a sludge material, advantageously a (dewatered) precipitation and/or coagulation product, in which a metal salt (e.g. $FeCl_3$ or $AlCl_3$) is used as a coagulant and/or flocculant. Advantageously, the sludge material is obtained from water treatment, such as drinking water treatment, wastewater treatment (e.g. bioreactor treatment) or groundwater treatment, e.g. backwash wastewater. Advantageously, the sludge material comprises calcium hydroxide.

According to a second aspect of the present disclosure, there is provided a method of removing a pollutant from water, as set out in the appended claims. A sorbent material as described herein (e.g. as obtained by methods according to the first aspect above), possibly immobilized or packed, e.g. in a filter, is contacted with contaminated water to enable the pollutant to sorb to the sorbent material.

According to a third aspect of the present disclosure, there is provided a sorbent material as set out in the appended claims. Such sorbent materials are advantageously prepared through methods as described herein (e.g. as provided by the first aspect).

According to a fourth aspect of the present disclosure, there is provided a water purification filter, as set out in the appended claims. The filter comprises the sorbent material as provided by the first or the third aspect. The filter can enable to carry out methods provided by the second aspect.

**Brief description of the figures**

Aspects of the invention will now be described in more detail with reference to the appended drawings, wherein same reference numerals illustrate same features and wherein:

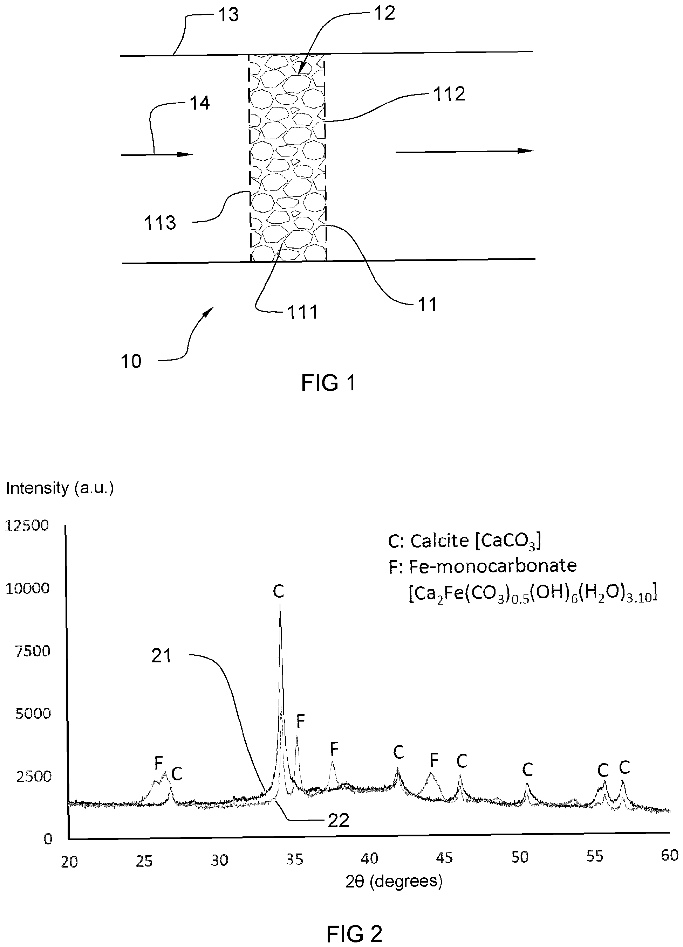

Figure 1 represents a diagram of a water treatment or purification filter packed with the sorbent material according to the present disclosure.

Figure 2 represents an XRD diagram of the particulate material (prior to carbonation) and of the sorbent material (following carbonation) obtained therefrom following Examples 1 and 2.

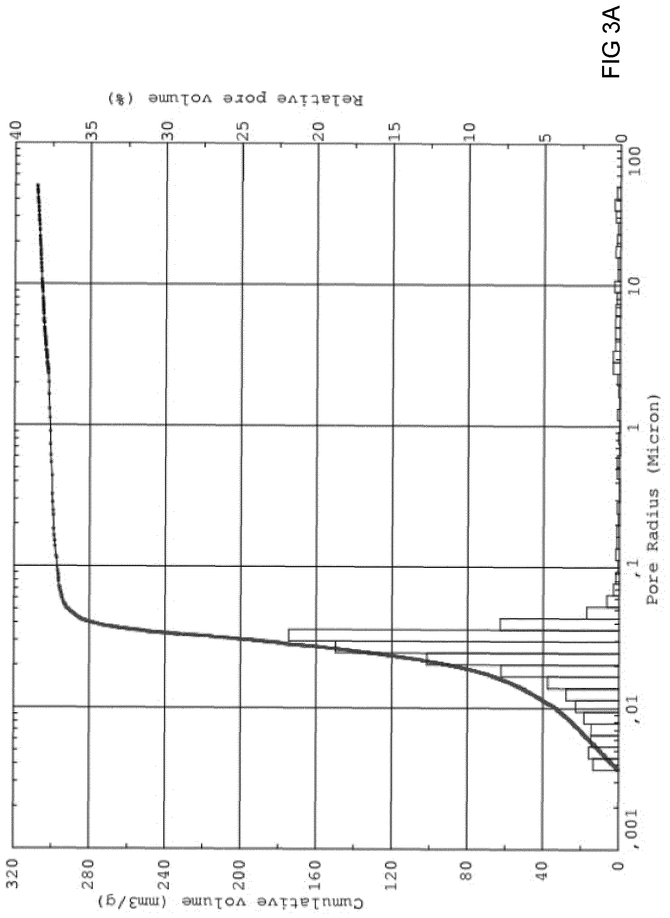

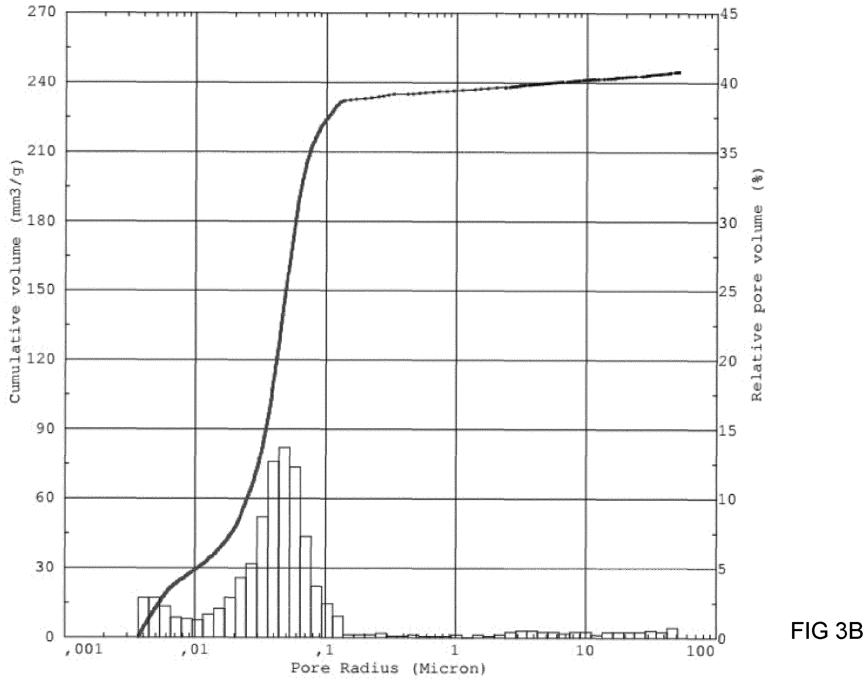

Figure 3A shows cumulative porosity and pore size distribution of the particulate material as a function of the pore radius; Figure 3B shows cumulative porosity and pore size distribution of the sorbent material as a function of the pore radius.

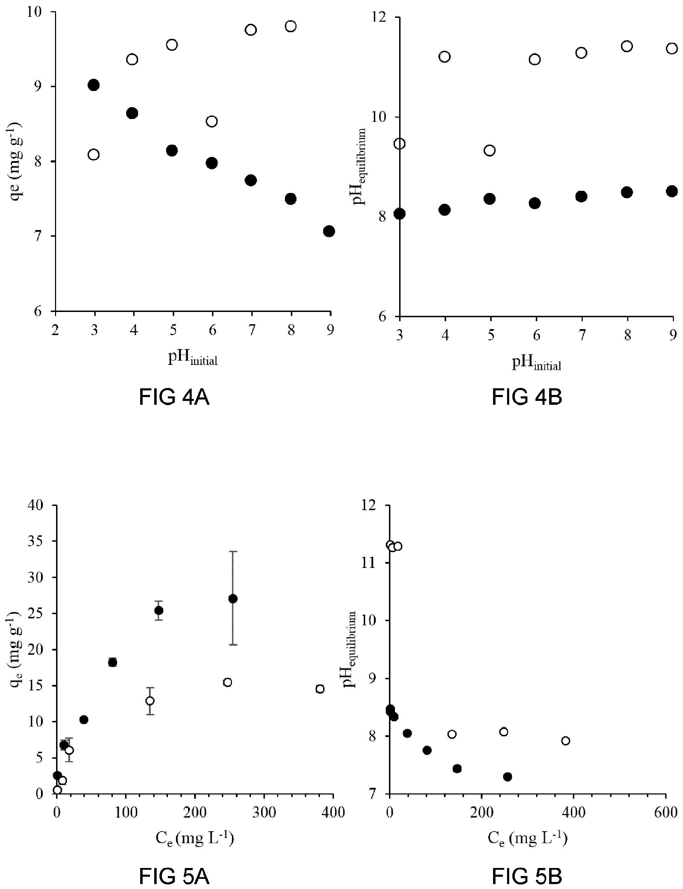

Figure 4A represents a graph of the phosphate adsorption capacity of the non-carbonated (open circles) and carbonated particles (full circles) as a function of the initial pH of the solution; Figure 4B represents a graph of the equilibrium pH of the non-carbonated (open circles) and carbonated particles (full circles) as a function of the initial pH of the solution.

Figure 5A represents a phosphate isotherm for the carbonated (full circles) and non-carbonated sample (open circles) as a function of the equilibrium concentration; Figure 5B represents the equilibrium pH for the carbonated (full circles) and non-carbonated sample (open circles) as a function of the equilibrium concentration. Error bars represent standard deviation (n = 2).

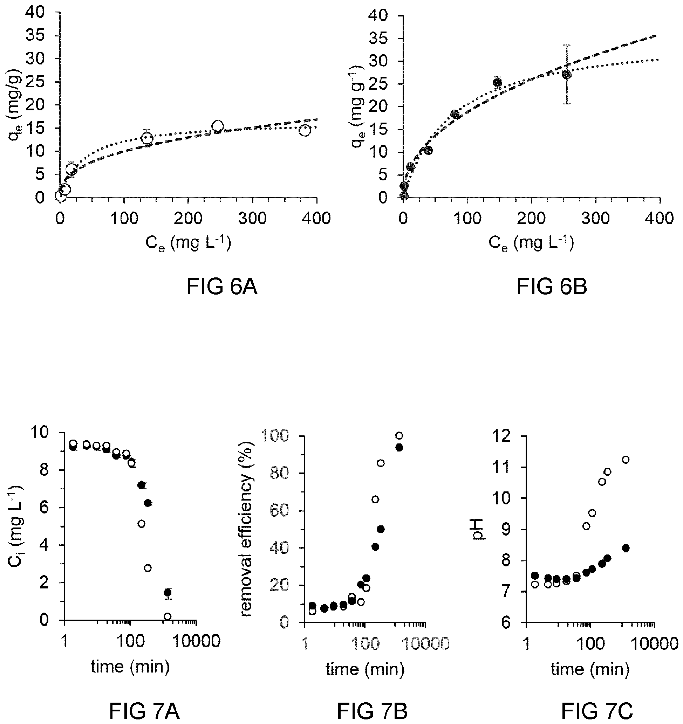

Figure 6A represents the adsorption-isotherm of the non-carbonated (example 1) sample of Fig. 5A and the modeled Langmuir (dotted line) and Freundlich (dashed line) isotherm; Figure 6B represents the adsorption isotherm of the carbonated sample (example 2) and the modeled Langmuir (dotted line) and Freundlich (dashed line) isotherm.

Figure 7A represents P concentration kinetics of the non-carbonated (example 1) and carbonated (example 2) samples as a function of the incubation time; Figure 7B represents the P removal efficiency kinetics of the non-carbonated (example 1) and carbonated (example 2) samples as a function of the incubation time; Figure 7C represents the pH kinetics of the non-carbonated (example 1) and carbonated (example 2) samples as a function of incubation time. Error bars represent standard deviation (n = 2).

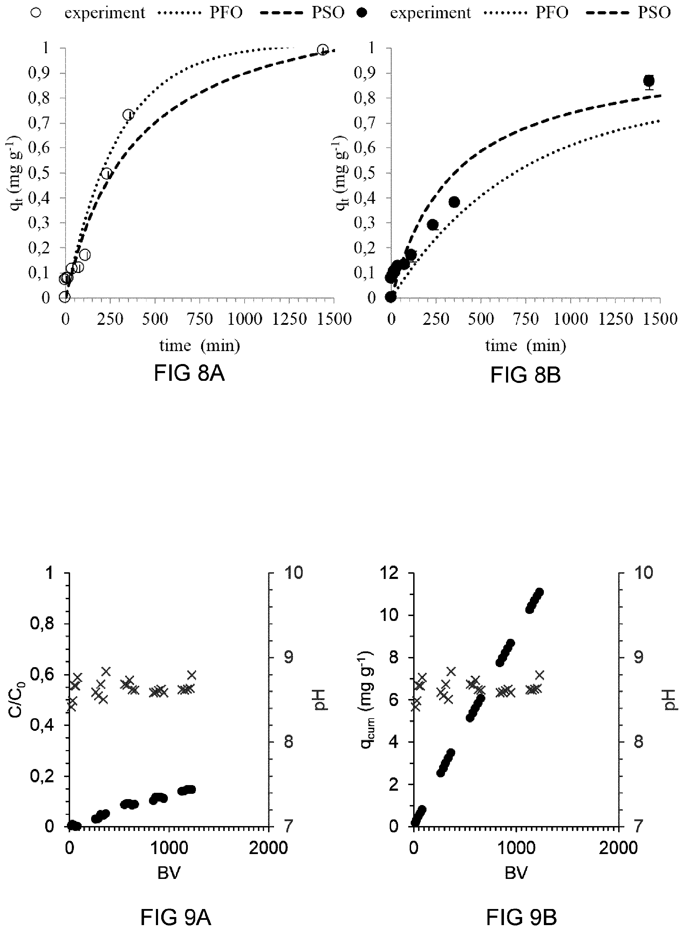

Figure 8A represents fitting of the P adsorption kinetics data of the non-carbonated samples (example 1, open circles) to the pseudo-first-order model (Eq. 5) and the pseudo-second-order model (Eq. 6) as a function of incubation time; Figure 8B represents fitting of the P adsorption kinetics data of the carbonated samples (example 2, full circles) to the pseudo-first-order model (Eq. 5) and the pseudo-second-order model (Eq. 6) as a function of incubation time.

Figure 9A represents removal efficiency (dots) on the left y-axis and the resulting pH (crosses) on the right y-axis as a function of the bed volume (BV) obtained from a column test performed for a carbonated sample; Figure 9B represents cumulative phosphate adsorption capacity (qt) (dots) on the left y-axis and the resulting pH (crosses) on the right y-axis as a function of the bed volume (BV) for the same test of Fig. 9A;

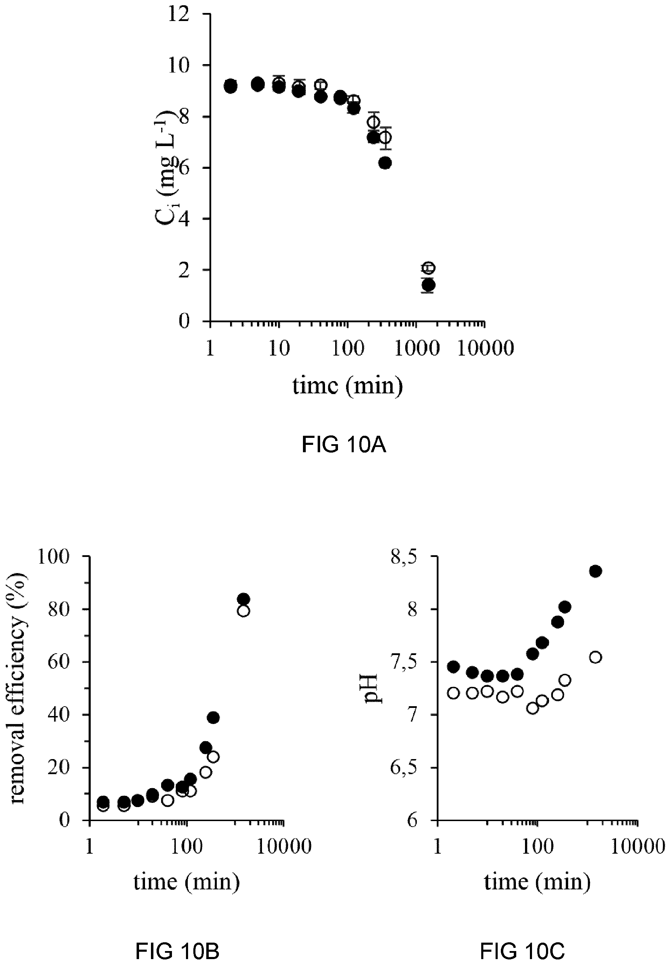

Figure 10A represents phosphate concentration kinetics of the carbonated sample (S-2; black full circle) and the Al/Fe composite sample (S-3; white open circle) at a S:L ratio of 10 g L$^{-1}$ as a function of the incubation time; Figure 10B represents phosphate removal rate of S-2 (black full circle) and S-3 (white open circle) at a S:L ratio of 10 g L$^{-1}$ as a function of the incubation time; Figure 10C represents the resulting equilibrium pH as a function of the incubation time for S-2 (black full circle) and S-3 (white open circle) at a S:L ratio of 10 g L$^{-1}$. Error bars represent standard deviation (n = 2).

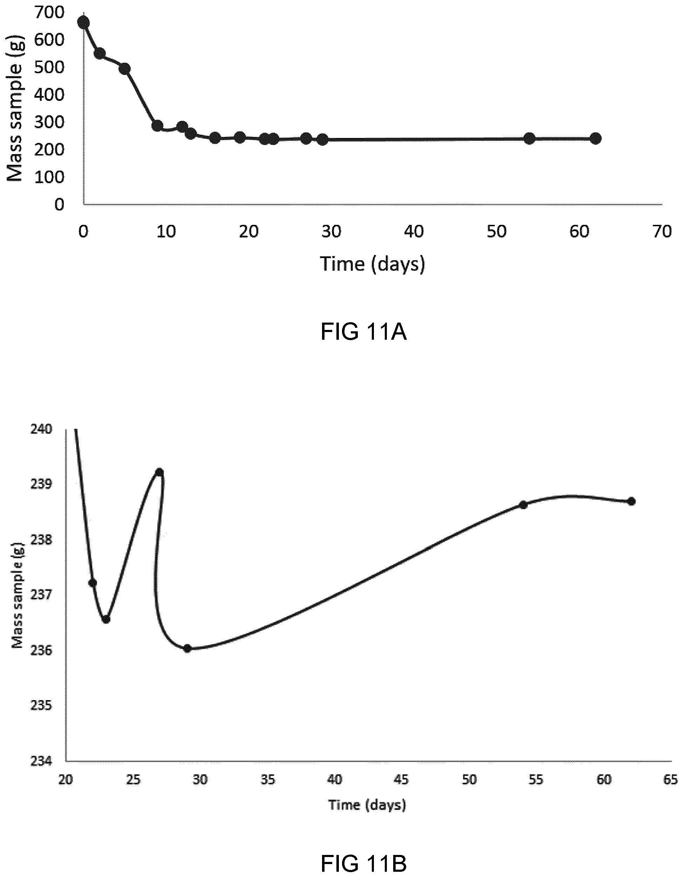

Figure 11A represents a graph showing mass evolution of the sample of Example 9 during carbonation in air at atmospheric pressure, 30°C and 80% relative humidity. Figure 11B shows a close-up of the graph of Fig. 11A, starting from 20 days of exposure.

## Detailed Description

According to the present disclosure, a sorbent material is prepared by reacting a particulate material with carbon dioxide in the presence of water to form carbonates which provide a binding phase bonding particles of the particulate material together. The obtained sorbent material may have any suitable shape, and may as well be a granular material having a particle size that is larger than the particle size of the initial particulate material utilized to prepare it.

The particulate material comprises a source of oxides and/or hydroxides of at least one metal element and a source of ions of at least one alkaline earth metal element. The source of oxides and/or hydroxides of at least one metal element can refer to one or more of: oxides, hydroxides and oxide-hydroxides (oxyhydroxides) of the at least one metal element. It is generally observed that (oxide-)hydroxides are more active towards sorption and advantageously, the particulate material comprises at least a source of (oxide-)hydroxides of the at least one metal element. The source of the oxides and/or hydroxides of the at least one metal element can refer to the oxides and/or hydroxides as such, to hydrates thereof, or to one or more salts of the at least one metal element.

The at least one metal element advantageously refers to an element capable of sorbent behaviour for one or more defined contaminants. The oxides and/or hydroxides of the at least one metal element are advantageously capable of sorbing or at least immobilizing a contaminant, which may be organic or inorganic, in an aqueous environment. Particular examples of suitable contaminants include one or more of the following elements: As, Cd, Cr, Co, Cu, Ga, Hg, Mo, Ni, P, Pb, Se, Zn, and V. Of these, phosphorus-based contaminants, such as phosphates are of particular relevance as contaminant in surface waters.

The at least one metal element is advantageously a metal element selected from one or more of groups 4, 7, 8, 13 and 14 of the periodic table of elements. The at least one metal element can be particularly selected from one or more of: iron (Fe), aluminium (Al), manganese (Mn), titanium (Ti), zirconium (Zr) and possibly silicon (Si). Of these, Fe and Al are particularly preferred due to their abundance and lower cost.

Oxides and/or hydroxides of iron can be comprised in the particulate material as an oxide, hydroxide and/or oxide-hydroxide of Fe(II) and/or Fe(III). Suitable examples are: iron(II) oxide (FeO), iron(II) hydroxide (Fe(OH)$_2$), iron(III) oxide (Fe$_2$O$_3$), iron(III) hydroxide (Fe(OH)$_2$), mixed oxides of iron(II) and iron(III) (Fe$_3$O$_4$) and iron(III) oxide-hydroxide (FeOOH). The source of oxides and/or hydroxides of iron can be provided to the particulate material as an iron salt like FeCl$_3$. Such iron compounds can occur in various molecular compositions and combinations, and all may be suitable in the particulate material. Examples of iron oxides and/or hydroxides that are possibly present in the particulate material are any one or combinations of: magnetite, hematite, maghemite and ferrihydrite. Advantageously, the particulate material comprises amorphous iron hydroxide. Amorphous iron hydroxide can refer to poor crystalline phases of iron hydroxide. Such amorphous iron hydroxide phases can be detected in an XRD diagram by any one of two broad peaks corresponding at 2θ between 30-40 and between 60-70. These peaks can be considered to be poor crystalline iron oxide. The XRD pattern is similar to 2-line ferrihydrite, Fe$_4$(O,OH,H$_2$O)$_{12}$.

Oxides and/or hydroxides of aluminium can be comprised in the particulate material as aluminium(III) oxide (Al$_2$O$_3$), aluminium hydroxide (Al(OH)$_3$), and/or aluminium oxide-hydroxide (AlO(OH)). The source of oxides and/or hydroxides of aluminium can be provided to the particulate material as an aluminium salt like AlCl$_3$. Examples of aluminium oxides and/or hydroxides that are possibly present in the particulate material are any one or combinations of: gibbsite, bayerite, doylerite, nordstrandite, boehmite and akdalaite. Manganese can be present in the particulate material in the form of an (oxyhydr)oxide - for example Mn(OH)$_2$ or MnOz. Titanium may be present in the particulate material as titanium (hydr)oxides - for example TiOz. Zirconium may be present in the particulate material as zirconium (hydr)oxides - for example ZrOz.

The particulate material advantageously comprises at least 20% by dry weight of the at least one metal element (elemental weight fraction), advantageously at least 22.5%, at least 25%, at least 27.5%, at least 30% or at least 35% by dry weight of the at least one metal element. In some examples, the indicated weight fractions can refer to the weight fraction of Fe, the weight fraction of Al or the sum of the weight fractions of Fe and Al. Additionally, the indicated weight fractions can refer to the sum of the weight fractions of Fe, Al, Mn, Ti and Zr. A higher amount of the at least one metal element typically results in a higher total sorption capacity of the sorbent material. The weight fraction of the at least one metal element is advantageously 70% by dry weight or less, such as 60% or less, or 50% or less.

The particulate material additionally comprises a source of ions of at least one alkaline earth metal element, preferably Ca and/or Mg. Such a source can refer to oxides and/or hydroxides of the at least one alkaline earth metal element. Suitable examples are: portlandite ($Ca(OH)_2$), free lime (CaO), periclase (MgO), brucite ($Mg(OH)_2$). Especially portlandite reacts quickly with $CO_2$. Consequently, the source of ions of the at least one alkaline earth metal element advantageously comprises hydroxides of the at least one alkaline earth metal element, preferably Ca. The carbonation reaction can be speeded up by first converting oxides of the at least one alkaline earth metal element into hydroxides. Sources of such oxides include stainless steel slag which often comprises free lime (CaO) instead of calcium hydroxide, although it may contain some $CaCO_3$.

Another suitable source of ions of the at least one alkaline earth metal element are calcium silicate minerals, such as meso- and sorosilicates. Examples are: Larnite ($Ca_2SiO_4$) also referred to as dicalcium silicate, cuspidine ($Ca_4Si_2O_7(F,OH)_2$) and wollastonite (CaSiOs).

Yet another suitable source of ions of the at least one alkaline earth metal element are hydrated calcium silicate minerals of the system $CaO-SiO_2-H_2O$. An example is tobermorite ($Ca_5Si_6O_{16}(OH)_2.4H_2O$).

Yet another suitable source of ions of the at least one alkaline earth metal element are amorphous calcium silicate phases. Those phases can be of the form $(CaO)_x((Na,K)_2O)_y(SiO_2)_z$.

Yet another suitable source of ions of the at least one alkaline earth metal element are magnesium silicate minerals, preferably of the form $MgO-SiO_2$. Examples are: serpentinite ($Mg_3Si_2O_5(OH)_4$), forsterite ($Mg_2SiO_4$) and enstatite ($MgSiC_3$).

Yet another suitable source of ions of the at least one alkaline earth metal element are hydrated aluminium silicate minerals (zeolites) comprising an alkaline earth metal element. Examples are: stilbite ($NaCa_2Al_5Si_{13}O_{36}.14H_2O$) and heulandite ($(Ca,Na)_2.3Al_3(Al,Si)_2Si_{13}O_{36}.12H_2O$).

Yet another suitable source of ions of the at least one alkaline earth metal element are calcium magnesium silicate minerals and/or amorphous phases of the $CaO-MgO-SiO_2$ system. Examples are: merwinite ($Ca_3Mg(SiO_4)_2$), bredigite ($Ca_7Mg(SiO_4)_2$) and mellite, which is a solid solution series between akermanite ($Ca_2MgSi_2O_7$) and gehlenite ($Ca_2Al(Al,Si)O_7$).

Yet another suitable source of ions of the at least one alkaline earth metal element are hydrated calcium-aluminium-sulphate hydroxides. An example is ettringite ($Ca_6Al_2(SO_4)_3(OH)_{12}.26H_2O$).

Yet another suitable source of ions of the at least one alkaline earth metal element are calcium aluminium oxides and/or amorphous phases of the form $CaO-Al_2O_3$ (e.g. tricalciumaluminate ($Ca_3Al_2O_6$)).

Yet another suitable source of ions of the at least one alkaline earth metal element are calcium aluminium oxide hydrates, preferably of the form $CaO-Al_2O_3-H_2O$.

Yet another suitable source of ions of the at least one alkaline earth metal element are crystalline and/or amorphous phases of one or more of the following systems: $CaO-Al_2O_3-Fe_2O_3$, $CaO-Fe_2O_3-H_2O$ and $CaO-Al_2O_3-Fe_2O_3-H_2O$.

The particulate material advantageously comprises at least 5% by dry weight of the at least one alkaline earth metal element, advantageously at least 7.5% by dry weight, advantageously at least 10% by dry weight, or at least 12.5% by dry weight, or at least 15% by dry weight, or at least 20% by dry weight. A higher amount of alkaline earth metals in the particulate material generally ensures a higher amount of carbonates being formed, resulting in higher strength. The amount of the at least one alkaline earth metal element in the particulate material can be 50% by dry weight or less, advantageously 40% by dry weight or less.

Other suitable sources of oxides and/or hydroxides of the at least one metal element and/or of ions of the at least one alkaline earth metal element can comprise: slag, such as stainless steel slag, municipal solid waste incinerator bottom ash, biomass ash, coal fly ash, etc..

Either one of the source of oxides and/or hydroxides of the at least one metal element and the source of ions of the at least one alkaline earth metal element, or both, can be obtained from, or comprised in, a sludge, such as an iron-rich or aluminium-rich sludge. The term sludge as used herein can refer to any precipitation and/or coagulation product, in which a metal salt (e.g. $FeCl_3$ or $AlCl_3$) is used as a coagulant and/or flocculant. In slightly basic water, the metal salt reacts to form hydroxide flocs that can remove suspended materials. A sludge can be solid, semi-solid, or suspended. It is typically generated from a municipal, commercial, or industrial wastewater treatment plant, water supply treatment plant, or air pollution control facility, exclusive of the treated effluent from a wastewater treatment plant.

The particulate material can comprise, or consist of, a sludge, preferably a sludge obtained from water treatment, such as drinking water treatment, wastewater treatment (e.g. bioreactor treatment) or groundwater treatment, e.g. backwash wastewater. Such a sludge typically comprises Fe and/or Al, particularly oxides and/or hydroxides of Fe and/or Al. In some examples, the sludge can be obtained when $FeCl_3$ is added to water being treated, causing coagulation of particulate matter in the water. The coagulation product comprises iron hydroxide. Calcium hydroxide ($Ca(OH)_2$) can be added to facilitate dewatering, e.g. in a filter press, to produce a filtercake. The filtercake hence advantageously comprises both a source of oxides and/or hydroxides of Fe and a source of ions of Ca and would be particularly suitable for use as the particulate material in methods of the present disclosure. Typically, such sludge comprising $Ca(OH)_2$ is not

recycled in prior art methods for producing sorbent materials, since the calcium hydroxide converts to calcium oxide during calcination, reducing sorption activity of the metal element (Fe, Al). Alternatively, the coagulation product can be dewatered by filter pressing, without addition of calcium hydroxide, such as the Fe-bearing (iron-rich) sludge described in WO 2019/129767. The sludge can comprise 6-40 wt.% Fe (on dry matter basis) and may comprise significant amounts of Al as well.

Other Fe-bearing sludge is common in the metallurgical and chemical industries. Sludge can comprise Fe in the form of ferrihydrite, hematite, magnetite and andradite, and impurity minerals, such as quartz, muscovite, albite and boehmite. For instance, groundwater treatment sludge and flocculent iron mud are rich in ferrihydrite.

The particulate material can comprise, or consist of, alum sludge. Alum sludge refers to a by-product of drinking water treatment, in which alum, generally referred to as aluminium sulfate, or other aluminium compounds clarify water by forming a gelatinous precipitate of aluminium hydroxide. The waste stream comprising this precipitate is referred to as alum sludge.

One or more pre-processing operations may be required on the starting materials (such as a sludge) to render them fit for use as (part of) the particulate material. In particular, a sludge may comprise a considerable amount of water, e.g. moisture content in excess of 50%, or even 70% or more by weight. In these cases, the pre-processing operation can comprise dewatering the starting material in order to reduce the moisture or water content to more acceptable levels, e.g. by drying in open air or in an air conditioned chamber (climate chamber), e.g. at a temperature of about 40°C, or (filter) pressing. Suitable levels of moisture (water) content of the particulate material are typically in the range of 40% or less by total weight, or 35% or less by total weight and can depend on e.g. particle size of the particulate material and whether or not a compaction or shaping step is carried out.

In some examples, the particulate material is obtained by mixing multiple fractions. By way of example, a first fraction, a second fraction and possibly one or more further fractions are mixed to obtain the particulate material. The first fraction (and possibly one or more further fractions) can substantially consist of a sludge acting as the source of oxides and/or hydroxides of the at least one metal element. The second fraction (and possibly one or more further fractions) can be a material comprising oxides and/or hydroxides of the at least one alkaline earth metal element, such as free lime, stainless steel slag (comprising significant portions of free lime), etc.

The starting materials can be too coarse for being utilized as the particulate material. The sludge and other possible starting materials may occur as large aggregates, e.g. particles adhere to form a cake, such as filter cake. These aggregates may have sizes exceeding 10 mm. A possible pre-processing operation can comprise breaking or comminuting the aggregates to a particulate material of smaller size. Other possible comminuting operations are milling or grinding to reduce particle size.

The particle size distribution can affect packing density and porosity or permeability. The particle size refers to the size of the constituent particles of the particulate material. These particles may be aggregated, forming larger aggregates. The particle size distribution refers to the particles, not the aggregates of these particles. Advantageously, the mesh size of the particulate material is 500 $\mu$m or smaller, such as 350 $\mu$m or smaller, advantageously 200 $\mu$m or smaller. The mesh size refers to all particles passing a mesh of indicated size. The particle size distribution of the particulate material advantageously has a 90-percentile diameter $d_{90}$ (i.e., 90% of the particles are smaller) smaller than or equal to 350 $\mu$m, advantageously smaller than or equal to 250 $\mu$m, advantageously smaller than or equal to 150 $\mu$m, advantageously smaller than or equal to 100 $\mu$m, and advantageously at least 5 $\mu$m, or at least 10 $\mu$m. Advantageously, the 50-percentile (median) diameter $d_{50}$ (i.e., 50% of the particles are smaller) of the particle size distribution of the particulate material is smaller than or equal to 250 $\mu$m, advantageously is smaller than or equal to 150 $\mu$m, advantageously smaller than or equal to 100 $\mu$m, advantageously smaller than or equal to 60 $\mu$m, and advantageously at least 1 $\mu$m, or at least 4 $\mu$m. Advantageously, the 10-percentile diameter $d_{10}$ (i.e., 10% of the particles are smaller) of the particle size distribution of the particulate material is smaller than or equal to 10 $\mu$m, advantageously is smaller than or equal to 5 $\mu$m, advantageously is at least 0.1 $\mu$m, or at least 0.5 $\mu$m. All particle diameters are determined on volumetric basis. The particle size distribution can be determined with a laser diffractometer, such as Mastersizer (Malvern Instruments). The indicated ranges can allow for obtaining desired porosity levels in the carbonated sorbent material.

The particulate material can comprise some amounts of organic compounds, which may be naturally present in the starting material(s), such as the sludge material(s). However, the presence of these organic compounds is not problematic as they generally do not contribute to the carbonation reactions and advantageously do not contribute to other binding reactions. The particulate material advantageously does not comprise any organic binders, or if present, these organic binders are present in a limited amount. By way of example, the total organic carbon (TOC) content of the particulate material is smaller than or equal to 9%, advantageously smaller than or equal to 5%, advantageously smaller than or equal to 2.5 %.

The particulate material advantageously has a pH between 6 and 10, preferably between 6 and 9, more preferably between 6.5 and 8.5. This resembles the normal pH range of surface water. The pH of the particulate material and/or of the sorbent material can be determined by batch leaching tests, e.g. with liquid (water) to solid ratio = 5 litre/kg dry matter (US = 5), 24h shaking to obtain equilibrium.

Advantageously, the particulate material is aggregated forming aggregates of mesh size 20 mm or smaller, advantageously 10 mm or smaller. The aggregates have a mesh size advantageously between 100 $\mu$m and 7 mm, or between 250 $\mu$m and 5 mm, or between 350 $\mu$m and 2.5 mm. To form the aggregates, the particulate material may be moisturized, washed or otherwise wetted. If originating from a sludge, the particulate material may already be wet. The particulate material, comprising significant amounts of water, may be dried to form a cake and the cake broken or comminuted into the aggregates. The particulate material is advantageously not subjected to shaping operations, such as moulding or compacting, in methods of the present disclosure.

Advantageously, a porosity of the (aggregates of the) particulate material is at least 25% (by volume), advantageously at least 30%, or at least 35%. The size distribution of the pores of the particulate material has a 50-percentile radius equal to or smaller than 5 $\mu$m, advantageously equal to or smaller than 2 $\mu$m, advantageously equal to or smaller than 1 $\mu$m, advantageously equal to or smaller than 0.5 $\mu$m, advantageously equal to or smaller than 0.2 $\mu$m. The 50-percentile pore radius of the particulate material can be between 0.01 $\mu$m and 0.1 $\mu$m. The indicated porosity values refer to the aggregated or shaped particulate material as defined above. Pore sizes and porosity levels can be measured by mercury intrusion (Hg porosimetry).

Next, the particulate material as defined above, possibly aggregated or otherwise shaped, is subjected to a carbonation reaction to form carbonates of the at least one alkaline earth metal element. The particulate material is reacted with carbon dioxide at desired reaction conditions. Advantageously, the carbon dioxide ($CO_2$) will have more affinity towards reacting with the alkaline earth metal elements than towards the other metal elements present in the particulate material. Particularly, the alkaline earth metal elements will form ions in the presence of water, favouring reaction with carbon dioxide.

Carbonation reaction can be effected in air or at carbon dioxide concentrations comparable to air. However, it is beneficial to perform an accelerated carbonation at elevated levels of carbon dioxide. The carbon dioxide content of the reacting atmosphere is advantageously at least 1 vol%, preferably at least 5%, at least 10%, at least 15%, or at least 20% by volume carbon dioxide, preferably at least 30% by volume carbon dioxide. The reacting atmosphere is advantageously a gas which may further comprise atmospheric compounds such as one or more of $N_2$, $O_2$ and water vapour. The carbon dioxide may be supplied in its pure form, from the exhaust gas of an industrial plant, or from flue gas.

Carbonation reaction of the particulate material is advantageously carried out at a temperature of 150°C or less, such as 120°C or less, or 90°C or less, and may be carried out at room temperature or at a higher temperature, e.g. at a temperature of at least 50°C, or at least 60°C. At these relatively low temperatures, the metal hydroxides are less likely to convert to oxides, thereby retaining the sorptive properties of the initial sorbent compounds to a maximal extent.

Carbonation reaction of the particulate material is advantageously carried out at a pressure which can substantially be atmospheric pressure or a pressure above atmospheric pressure (such as at least 0.1 MPa gauge pressure, or at least 0.25 MPa gauge pressure and possibly up to 6 MPa gauge pressure, or up to 2 MPa gauge pressure).

Carbonation reaction of the particulate material can be carried out in an open or continuous reactor (e.g. a drum reactor) with a continuous inflow of $CO_2$, or in a closed reactor supplied with enough $CO_2$ to support the entire reaction, and the former are preferred since they provide higher throughput.

Without wishing to be bound by theory, the carbonation reaction of the particulate material can proceed by dissolution of carbon dioxide in water to form carbonate or bicarbonate ions. These ions react with the ions of the at least one alkaline metal element (which in turn are dissolved in water as well) hence forming alkaline earth metal carbonates. The carbonates will typically form a matrix that binds or partially encloses the metal oxides and/or hydroxides.

To this end, the carbonation reaction is carried out in the presence of a source of water. Water can be provided as steam, as water vapour, by heating water separately inside the reactor, by decomposing a hydrate comprised in the particulate material, by release of physically bound water, or by any other chemical reaction leading to a release of moisture. Advantageously, the carbonation reaction is carried out in atmosphere saturated with water vapour (i.e., relative humidity of 100%).

Advantageously, the moisture (water) content of the particulate material, at the beginning of the carbonation reaction, is advantageously 50% by dry weight or less, advantageously 40% by dry weight or less, advantageously 35% by dry weight or less, advantageously 30% by dry weight or less. Too high water or moisture contents may block the pores or interstitial voids of the particulate material and hinder the carbon dioxide in diffusing inside the material. The particulate material however advantageously comprises some water or moisture to carry out the carbonation reactions, although at least part of this water can be supplied through a moist atmosphere in the reaction chamber.

Advantageously, at the beginning of the carbonation reaction, the moisture content of the particulate material is smaller than or equal to 0.8 times the moisture saturation content, advantageously smaller than or equal to 0.6 times the moisture saturation content and may be at least 0.1 times, or at least 0.2 times the moisture saturation content. The moisture saturation content refers to the moisture content when all the pores are filled with moisture (water).

Advantageously, at the beginning of the carbonation reaction, the moisture content of the particulate material is in the range between 90% and 10% of the moisture saturation content, advantageously between 80% and 20%, advantageously between 80% and 40% of the moisture saturation content. These levels of moisture saturation content enable that the internal pores of the particulate material remain accessible to the carbon dioxide and hence ensure carbonation reactions to occur uniformly.

The carbonation reaction is advantageously performed for at least 15 minutes, preferably at least 1 hour, preferably at least 2 hours, most preferably at least 4 hours. It can be continued for as long as 48 hours, more preferably at most 24 hours, more preferably 16 hours or less.

Carbon dioxide uptake can be determined from total carbon (TC) and total inorganic carbon (TIC) measurements. Total carbon (TC) can be determined by the combustion gravimetric method. If no organic carbon is present, the combustion method to determine total carbon (TC) can be used. The test method involves burning the sample in a stream of oxygen. The $CO_2$ in the evolved gases is then collected in a suitable absorbent and its mass determined. The time of analysis is very short (10 minutes). If no organic carbon is present the total carbon (TC) content equals the total inorganic carbon (TIC) content, and the $CO_2$ content in mass% is given by:

$$CO_2\ m\% = TC \times \frac{44.01\ (atomic\ mass\ of\ CO2)}{12.01\ (atomic\ mass\ C)} \qquad \text{(Eq. 1)}.$$

If organic carbon is present, an indirect method can be used in which the TC is determined of the sample 'as is' and after dissolution of the carbonates by an acid. In this way TC and TOC (total organic carbon) are determined and the total inorganic carbon is calculated as TIC = TC - TOC. The TIC can be recalculated to $CO_2$ by:

$$CO_2\ m\% = TIC \times \frac{44.01\ (atomic\ mass\ of\ CO2)}{12.01\ (atomic\ mass\ C)} \qquad \text{(Eq. 2)},$$

or

$$CO_2\ m\% = TC \times \frac{44.01\ (atomic\ mass\ of\ CO2)}{12.01\ (atomic\ mass\ C)} - TOC\ \frac{44.01\ (atomic\ mass\ of\ CO2)}{12.01\ (atomic\ mass\ C)}$$

with TC = TC determined after drying of the sample at 105°C, and TOC = TC determined after drying of the sample and dissolution of the carbonates with acid. Note that the weight of the sample before acid treatment should be used as a reference for the TOC measurement.

A sorbent material is obtained as a product of the carbonation reaction. The sorbent material can be a granular material wherein the granules may correspond to the aggregates of the particulate material prior to carbonation, i.e. the carbonation reaction results in bonding of the particles within the aggregates. By way of example, a size distribution of the granules (particles) of the sorbent material can have a 90-percentile diameter (by volumetric analysis) between 100 $\mu$m and 20 mm, advantageously between 500 $\mu$m and 10 mm, advantageously between 750 $\mu$m and 5 mm. The particle size distribution of the sorbent material can have a 50-percentile diameter (by volumetric analysis) between 50 $\mu$m and 10 mm, advantageously between 100 $\mu$m and 5 mm, advantageously between 200 $\mu$m and 3 mm, advantageously between 450 $\mu$m and 2 mm. Alternatively, if the particulate material is subjected to a shaping or compaction operation, the sorbent material can be of any other suitable shape, e.g. rod-like, cylindrical, disc-like, etc.

The sorbent material advantageously comprises at least 3% by weight of carbonates ($CC_3^{2-}$), advantageously at least 4% by weight, advantageously at least 5% by weight. Advantageously, the difference in total inorganic carbon (TIC) content of the sorbent material with respect to the particulate material, resulting from carbonation at the indicated conditions, is at least 0.5%, advantageously at least 0.6%, advantageously at least 0.75%, advantageously at least 1%, advantageously at least 1.2%. These values hence relate to the TIC increase compared to the TIC originally comprised in the particulate material prior to (drying and) carbonation, i.e. TIC of sorbent material minus TIC of particulate material prior to (drying and) carbonation. Advantageously, the (absolute) total inorganic carbon content of the sorbent material is at least 0.5%, advantageously at least 1%, advantageously at least 1.5%, advantageously at least 2%, advantageously at least 2.5%, advantageously at least 3%, such as between 3.5% and 10%.

The sorbent material comprises oxides and/or hydroxides of the at least one metal element. These oxides and/or hydroxides are generally the ones as indicated above in relation to the particulate material, i.e. oxides, hydroxides and oxide-hydroxides (oxyhydroxides) of the at least one metal element. The at least one metal element is advantageously a metal element selected from one or more of groups 4, 7, 8, 13 and 14 of the periodic table of elements. The at least one metal element can be particularly selected from one or more of: iron (Fe), aluminium (Al), manganese (Mn), titanium (Ti), zirconium (Zr) and possibly silicon (Si), preferably Fe and/or Al.

The sorbent material advantageously comprises at least 15% by dry weight of the at least one metal element (elemental weight fraction), advantageously at least 17.5%, at least 20%, at least 22.5%, at least 25% or at least 30% by weight of the at least one metal element. In some examples, the indicated weight fractions can refer to the weight fraction of Fe, the weight fraction of Al or the sum of both weight fractions. Additionally, the indicated weight fractions can refer to the sum of the weight fractions of Fe, Al, Mn, Ti and Zr. A higher amount of the at least one metal element typically results in a higher total sorption capacity of the sorbent material. The weight fraction of the at least one metal element is advantageously 60% by dry weight or less, such as 50% or less, or 45% or less.

The sorbent material advantageously comprises at least 3.5% by weight of the at least one alkaline earth metal element (elemental weight fraction), advantageously at least 5% by weight, advantageously at least 7.5% by weight, or at least 10% by weight, or at least 12.5% by weight, or at least 15% by weight. The amount of the at least one alkaline earth metal element in the sorbent material can be 45% by weight or less, advantageously 35% by weight or less.

Advantageously, a porosity of the sorbent material is at least 25% (by volume), advantageously at least 30%, or at least 35%. The size distribution of the pores of the sorbent material has a 50-percentile radius equal to or smaller than 25 $\mu$m, advantageously equal to or smaller than 15 $\mu$m, advantageously equal to or smaller than 10 $\mu$m, advantageously equal to or smaller than 5 $\mu$m, advantageously equal to or smaller than 2 $\mu$m. The 50-percentile pore radius of the sorbent material can be between 0.005 $\mu$m and 1 $\mu$m, advantageously between 0.01 $\mu$m and 0.5 $\mu$m. Pore sizes and porosity levels can be measured by mercury intrusion (Hg porosimetry).

Advantageously, a suspension of the sorbent material at a solid to liquid ratio of 10 g L$^{-1}$ in an aqueous HCl or NaOH solution with initial pH between 4 and 10 has an equilibrium pH between 7 and 9 after 24h at 20 °C. Advantageously, the sorbent material has a maximum sorption capacity ($Q_{max}$) for phosphate in an aqueous KH$_2$PO$_4$ solution with initial pH = 7 and loading of the sorbent material of 10 g L$^{-1}$ solid to liquid ratio for 24h at 20°C of at least 20 mg g$^{-1}$, advantageously at least 25 mg g$^{-1}$, advantageously at least 30 mg g$^{-1}$, advantageously at least 35 mg g$^{-1}$ as determined by fitting with a Langmuir isotherm with correlation coefficient $R^2$ = 0.90 or higher, preferably $R^2$ = 0.96 or higher, preferably $R^2$ = 0.98 or higher.

Referring to Fig. 1, the sorbent material according to the present disclosure is advantageously utilized in a water treatment filter 10. The filter 10 comprises a housing 11 having opposite walls 112, 113 that are at least partially permeable to water. The housing 11 defines a chamber 111 arranged between the opposite walls 112, 113 which is packed with the sorbent material 12. The sorbent material can be immobilized in the chamber 111, e.g. as a packed bed of particles of sorbent material. The filter 10 is placed in a channel 13 in which water is made to flow according to the arrows 14 through walls 113, 112, thereby passing through the chamber 111 and thus through the sorbent material 12. Filter 10 can alternatively be made as a bag filter. In this case, housing 11 is a possibly closed bag made with permeable sheets or foils. The bag is filled with sorbent material 12 and can be immersed in contaminated water.

**Examples**

**Example 1: Particulate material**

A drinking water treatment sludge obtained by coagulating surface water with FeCl$_3$ and adding Ca(OH)$_2$ before dewatering to produce filter cakes was utilized as particulate material. The composition of the particulate material was measured by a portable XRF device. The Fe-content (expressed as oxides - Fe$_2$O$_3$) was measured to be 44% by weight. The Ca-content (expressed as oxides - CaO) was measured to be 31% by weight. Other constituents were found to be SiO$_2$ (1.0% wt.), SO$_3$ (2.1% wt.), K$_2$O (0.11% wt.), Cl (0.24% wt.), V$_2$O$_5$ (0.11% wt.). The total inorganic carbon (TIC) content of the particulate material was 1.6 wt.%, the total organic carbon (TOC) content was 8.7 wt.%. This initial TIC was due to spontaneous carbonation of a portion of the alkaline earth metal phases of the particulate material. The density of the particulate material (dry matter) was measured to be 2.50 g/cm$^3$. The equilibrium pH of the particulate material was measured to be 11.3. This particulate material was further utilized in experiments as a comparative non-carbonated sorbent by drying at 40°C and breaking it into granulates of 0.5 mm - 2 mm size.

**Example 2: Carbonation**

Particulate material of example 1 was only partially dried to a water content of 36 wt.% and was carbonated at 50°C and 3 bar full CO$_2$ atmosphere during 24 hours. The carbonated material was broken into granulates of 0.5 mm - 2 mm to obtain a sorbent material. The density of the sorbent material was measured to be 2.47 g/cm$^3$. The TIC = 4%, hence twice the amount of the particulate material (not carbonated). The carbonation reaction hence allowed to store a significant amount of carbon dioxide from atmosphere. The carbonated material had a pH of 8. Fig. 2 shows an XRD diagram of the carbonated material 21 (sorbent material) compared to the non-carbonated material 22 (particulate material). The XRD diagram shows formation of calcite while Fe-monocarbonate peaks from the non-carbonated material were not observed in the carbonated specimen. These Fe-monocarbonate phases are an intermediate carbonation product.

### Example 3: Hg porosimetry

The pore size distribution of the particulate material (example 1) and the sorbent material obtained therefrom (example 2) was determined by mercury intrusion. Fig. 3A shows cumulative porosity and pore size distribution of the particulate material as a function of the pore radius. Fig. 3B shows cumulative porosity and pore size distribution of the sorbent material as a function of the pore radius. It can be seen from the graphs that the pore size distribution is not significantly affected by the carbonation reactions. This is beneficial for the sorbent material.

### Example 4: pH measurements

Phosphorus (P) adsorption properties of the particulate material (not carbonated - example 1) and of the resulting sorbent material (example 2) were explored by assessing their P adsorption from synthetic 100 mL solutions of 100 mg-phosphate $L^{-1}$ with a varying initial pH between 4 and 10. The phosphate solutions were prepared by dissolving $KH_2PO_4$ in distilled water, and diluted HCl or NaOH solutions were added to adapt the pH. For 24 h, suspensions with a solid to liquid (S:L) ratio of 10 g $L^{-1}$ were shaken at 20 °C. After this period, the pH of the solutions was measured again, and the solutions were sampled and filtered (chromafil® RC-45/25 - 0.45 $\mu$m). The filtered samples were measured by ICP-AAS to determine P, Ca and Fe concentration. The results in terms of P adsorption capacity and equilibrium pH of the sorbent material is compared to the particulate material (not carbonated) in Figs. 4A-4B.

From Figs. 4A-4B it follows that the pH of the non-carbonated sample (open, white circles) becomes alkaline at equilibrium (pH = 11) almost independently of the starting (initial) pH of the solution. This is not desired, since the utilization of such material as sorbent material to treat surface water can harm aquatic life. Conversely, the carbonated sample (full, black circles) becomes slightly alkaline (pH 8), independently of the starting (initial) pH of the solution. The P-sorption capacity decreases when the initial pH of the solution is more alkaline which is to be expected as iron hydroxides adsorb phosphates most between pH = 4-6.

### Example 5: Adsorption isotherms

The phosphate adsorption isotherm of the materials of examples 1 and 2 were determined by incubating these materials (S:L ratio of 10 g L-1) for 24 h at 20 °C in solutions with P concentrations ranging between 5 and 500 mg-P $L^{-1}$. The initial solution pH was brought to 7. After the reaction, the pH and phosphate concentration of the solutions were measured. The obtained adsorption isotherm data were fitted to the Langmuir isotherm model and the Freundlich isotherm model.

To determine the effect of carbonation on the sorption capacity a sorption isotherm was determined by varying the concentration of phosphate in solution. Results of the P-adsorption isotherms and equilibrium pH are shown in Figs. 5A-5B. For a proper isotherm the pH of the solution at equilibrium should be the same or at least very similar. This is not the case for when the particulate material samples (example 1; non-carbonated) are brought into contact with solutions of low phosphate concentrations (<125 ppm phosphate). A huge increase in pH from 7 of the initial solution to 11 is observed (Fig. 5B, open circles). A sudden drop is observed at higher concentrations to a pH of about 8. The pH of the carbonated sample also decrease in pH, but much less drastically from 8.8 to 7.5 (Fig. 5B, closed circles).

The results of Fig. 5A were fitted to the Langmuir isotherm model and the Freundlich isotherm model. The Langmuir isotherm model can be expressed as:

$$S = \frac{Q_0 bC}{(1+bC)} \qquad \text{(Eq. 3)}.$$

The Freundlich isotherm model can be expressed as:

$$S = K_f C^{(1+n_f)} \qquad \text{(Eq.4)}.$$

Results of the fitted isotherms are shown in Fig. 6A for the particulate material (example 1 - open circles) and in Fig. 6B for the sorbent material (example 2 - full circles). Table 4 lists the calculated adsorption isotherm parameters. The capacity of the carbonated sample (example 2) as determined by the Langmuir isotherm is more than two times (36 mg g$^{-1}$ vs 17 mg g$^{-1}$) that of the non-carbonated sample (example 1). One possible assumption is that in the non-carbonated sample the phosphate is also removed by precipitation, blocking the active sites.

Table 1: Adsorption isotherm parameters of the P adsorption on non-carbonated and carbonated material, according to the Langmuir model and the Freundlich model.

| | Langmuir | | | Freudlich | | |
|---|---|---|---|---|---|---|
| | $Q_0$ | b | $R^2$ | $n_f$ | Ln $K_f$ | $R^2$ |
| | mg g$^{-1}$ | L mg$^{-1}$ | | | | |
| **Non-carbonated** | 16.7 | 0.0268 | 0.985 | 2.64 | 1.74 | 0.934 |
| **carbonated** | 36.1 | 0.0131 | 0.981 | 2.15 | 2.21 | 0.983 |

**Example 6: Adsorption kinetics**

The phosphate sorption kinetics of the sorbent samples (examples 1 and 2) was examined by incubating the samples in synthetic solutions of 10 mg-$PO_3^{4-}$ L$^{-1}$ (by dissolving $NaH_2PO_4$) at initial pH 7. The S:L was kept constant at 10 g L$^{-1}$. To this end, 1 g of the granulates was brought into contact with 100 mL of the phosphate solution and shaken at 80 rpm. At specific times after the start of adsorption, the solution was sampled for phosphate analysis. The phosphate concentration, P removal efficiency and pH are shown in Figs. 7A-7B and 7C respectively.

The obtained adsorption kinetic data were fitted to the pseudo-first-order model and the pseudo-second-order model. The pseudo-first-order model (PFO) is expressed as:

$$q_t = q_e(1 - exp^{-k_1 t}) \qquad \text{(Eq. 5).}$$

The pseudo-second-order model (PSO) is expressed as:

$$q_t = \frac{k_2 q_e^2 t}{1 + k_2 q_e t} \qquad \text{(Eq. 6),}$$

wherein $q_e$ is the adsorbed amount of phosphate (mg g$^{-1}$) at equilibrium, $q_t$ is the uptake at any time t (mg g$^{-1}$), $k_1$ is pseudo-first order (min$^{-1}$) rate constant and the $k_2$ is the pseudo-second order (g mg$^{-1}$ min$^{-1}$) rate constant, respectively (M. Ateia, D.E. Helbling, W.R. Dichtel, Best Practices for Evaluating New Materials as Adsorbents for Water Treatment, ACS Materials Letters 2(11) (2020) 1532-1544). The parameters determined from the resulting linear fit are given in Table 2. Sorbent samples prepared by example 1 are denoted S-1. sorbent samples prepared by example 2 are denoted S-2. The kinetics of both sorbents are best fitted using the PFO model.

Results of the fitted data is shown in Fig. 8A for the particulate material (S-1; non-carbonated sample, example 1) and in Fig. 8B for the sorbent material (S-2; carbonated sample, example 2). The kinetic parameters were determined as indicated in Table 2. The removal of the phosphate for both samples is similar over time. The non-carbonated accelerates a bit after 100 minutes which coincides with an sharp increase in pH.

**Example 7: Dynamic test**

A column test was performed for the carbonated sample (example 2). 5g of sample was put in a column with diameter of 16 mm. A flow of 1 mL min$^{-1}$ of a 10 mg L$^{-1}$ phosphate solution was pumped through the column and samples were taken at fixed time intervals. The results of the column test are shown in Fig. 9A in terms of removal efficiency (dots) and the resulting pH (crosses) as a function of the bed volume (BV), and in Fig. 9B in terms of the cumulative phosphate adsorption capacity (qt) (dots) and the resulting pH (crosses) as a function of the bed volume. The carbonated samples showed a good removal efficiency for phosphate which gradually decreased.

**Example 8: Adsorption kinetics: comparison with prior art sorbent**

Phosphate sorption kinetics of example 6 (sorbent samples prepared by example 1 (S-1, non-carbonated sample) and example 2 (S-2, carbonated sample)) were compared with P-sorption kinetics of samples of sorbent material prepared according to EP 3505239, Examples 1 and 2. A third sorbent sample (S-3) was prepared by mixing Fe-bearing sludge (50 wt%) with alum sludge (50 wt%), breaking into granulates of 0.5 mm - 2 mm and calcining at 550 °C according to the recipe described in EP 3505239, Example 2.

The three different sorbent samples were incubated in synthetic solutions of 10 mg-$POa^{4-}$ $L^{-1}$ (by dissolving $NaH_2PO_4$) at initial pH 7. The S:L was kept constant at 10 g $L^{-1}$. To this end, 1 g of the granulates was brought into contact with 100 mL of the phosphate solution and shaken at 80 rpm. At specific times after the start of adsorption, the solution was sampled for phosphate analysis and pH measurement. The resulting time dependent phosphate concentration, sorbent capacity and pH are shown in Figs. 10A-10B-10C for S-2 (black circles) and S-3 (white open circles).

The obtained adsorption kinetic data were fitted to the pseudo-fist-order model (Eq. 5) and the pseudo-second-order model (Eq. 6). The parameters determined from the resulting linear fit are given in Table 2. The kinetics of all three sorbents are best fitted using the PFO model. The first order rate constant for the carbonated sorbent (S-2) is 40 % higher compared to a Al/Fe composite sorbent (S-3) with similar maximum capacity and equilibrium pH resulting in a 22 % shorter time (520 min versus 665 minutes) needed to adsorb 50 % of the phosphate ions.

**Table 2**: Kinetic parameters fitted using the PFO and PSO model for phosphate adsorption on the different sorbents (S:L = 10 g $L^{-1}$ in 10 mg-$PO_3^{4-}$ $L^{-1}$ (by dissolving $NaH_2PO_4$) at initial pH 7). Units for $q_{max}$ in mg $PO_3^{4-}$ $g^{-1}$; $q_{e,exp}$ and $q_{e,cal}$ in mg Fe $g^{-1}$; $k_1$ in $min^{-1}$; $k_2$ in g $mg^{-1}$ $min^{-1}$. $q_{max}$ is the maximum phosphate adsorption capacity of the respective sorbent material as derived from the Langmuir isotherm calculated from adsorption experiments at a S:L of 10 for 8 different phosphate concentration between 5 and 500 mg $L^{-1}$. ($R^2$: correlation coefficient)

| | isotherm | experiment | PFO | | | PSO | | | |
|---|---|---|---|---|---|---|---|---|---|
| | $q_{max}$ | $q_{e,exp}$ | $q_{e,cal}$ | $k_1$ | $R^2$ | $q_{e,cal}$ | $k_2$ | $R^2$ | $t_{50}$ (min) |
| S-1 | 17 | 0.99 | 1.02 | 0.0034 | 0.937 | 1.24 | 0.0021 | 0.786 | 205 |
| S-2 | 36 | 0.86 | 0.81 | 0.0014 | 0.969 | 0.99 | 0.0029 | 0.809 | 520 |
| S-3 | 32 | 0.77 | 0.74 | 0.0010 | 0.967 | 0.96 | 0.0020 | 0.663 | 665 |

**Example 9: Carbonation at atmospheric pressure.**

A drinking water treatment sludge obtained by coagulating surface water with $FeCl_3$ and adding $Ca(OH)_2$ before dewatering to produce filter cakes, as disclosed in example 1 was utilized as particulate material. The particulate material was placed in a climate chamber for a period of 3 months and exposed to air at atmospheric pressure and a temperature of 30°C, having a relative humidity of 80%. The $CO_2$ concentration in the air was < 1 vol. %.

Within the first 10 days of exposure, the water content of the particulate material decreased from 72 % to 14 % by total weight, the majority of the water was evaporated in the course of the first 7 days of exposure to the above-mentioned atmosphere (see Fig. 11A). Thereafter a slight weight increase was observed, as seen in the diagram of Fig. 11B showing a close-up of Fig. 11A starting from 20 days of exposure.

When prolonging the exposure in the climate chamber as described above for a period of 3 months, a slight increase of the sample weight of 1.4% with respect to the weight of the sample was observed, and continued consumption of $CO_2$ was observed due to spontaneous carbonation of the material. It is assumed that the majority of the $CO_2$ uptake occurred in the first two weeks of exposure.

The total inorganic carbon content of the sample increased with 1.4 % when compared to the original non-carbonated material. The results are summarized in Table 3 below. From Example 9 it can be concluded that exposure to elevated pressure or increased $CO_2$ concentration is not required to achieve a sufficient level of carbonation. Exposure of a particulate material according to the present disclosure to atmospheric conditions suffices to achieve carbonation, provided an optimal water content of the material can be achieved.

**Table 3:** Total inorganic carbon (TIC) content and pH of sludge material prior to carbonation and materials obtained after carbonation according to Example 1 and after drying in air according to Example 9.

| Sample description | Total content inorganic carbon | pH |
|---|---|---|
| Sludge before carbonation | 2.0 wt.% | 11.3 |
| Example 1 | 4.0 wt.% | 8.0 |
| Example 8 | 3.4 wt.% | 8.2 |

**Claims**

1. Method of preparing a sorbent material, the method comprising:

   obtaining a particulate material comprising a source of oxides and/or hydroxides of at least one metal element and a source of ions of at least one alkaline earth metal element,
   reacting the particulate material with an atmosphere comprising carbon dioxide in the presence of water to form carbonates of the at least one alkaline earth metal element, thereby obtaining the sorbent material, such that a difference in total inorganic carbon content of the sorbent material with respect to the particulate material is at least 0.5% by weight,
   wherein the at least one metal element is at least one element selected from any one of group 4, 7, 8, 13 and 14 of the periodic table, and
   wherein the particulate material comprises at least 20% by dry weight of the at least one metal element and at least 5% by dry weight of the at least one alkaline earth metal element.

2. Method of claim 1, wherein the particulate material comprises at least 10% by dry weight of the at least one alkaline earth metal element, preferably at least 15% by dry weight.

3. Method of claim 1 or 2, wherein the at least one metal element is selected from: Fe, Al, Mn, Ti and Zr.

4. Method of any one of the preceding claims, wherein the particulate material comprises at least 25% by dry weight of the at least one metal element, preferably at least 30%, more preferably at least 35% by dry weight.

5. Method of any one of the preceding claims, wherein the particulate material comprises at least 20% by dry weight Fe and/or Al, preferably at least 25% by dry weight..

6. Method of any one of the preceding claims, wherein the particulate material is reacted with carbon dioxide at a temperature of 150°C or less and a pressure which is at least atmospheric pressure, wherein the atmosphere comprises at least 1 vol%, preferably at least 2 vol%, preferably at least 5 vol % carbon dioxide, preferably wherein the particulate material is reacted with carbon dioxide at a temperature of 120°C or less, preferably a temperature of 90°C or less.

7. Method of any one of the preceding claims, wherein the at least one metal element is present in the sorbent material substantially as oxides and/or hydroxides of the metal element, preferably wherein substantially no carbonates of the at least one metal element are formed in the sorbent material in the step of reacting the particulate material with carbon dioxide.

8. Method of any one of the preceding claims, wherein obtaining the particulate material comprises:

   adding a coagulation agent to water thereby obtaining a coagulation product, wherein the coagulation agent comprises the at least one metal element which is transformed into the oxides and/or hydroxides of the at least one metal element in the coagulation product,
   separating the coagulation product from water to obtain an aggregated material, wherein the aggregated material is at least a fraction of the particulate material.

9. Method of claim 8, further comprising adding oxides and/or hydroxides of the at least one alkaline earth metal to the coagulation product prior to separating the coagulation product from water.

10. Method of any one of the preceding claims, wherein the sorbent material is obtained as a granular material having a 90-percentile grain size between 0.1 mm and 20 mm, preferably between 0.5 mm and 10 mm.

11. Method of removing a pollutant comprising an element selected from one or a combination of As, Cd, Cr, Co, Cu, Ga, Hg, Mo, Ni, P, Pb, Se, Zn, and V from contaminated water, comprising:

    preparing the sorbent material according to the method of any one of the preceding claims, and
    contacting the contaminated water with the sorbent material, wherein the pollutant sorbs to the sorbent material.

12. Sorbent material, comprising oxides and/or hydroxides of at least one metal element and a total inorganic carbon content of at least 0.5% by weight, wherein the sorbent material comprises at least 15% by weight of the at least one metal element and at least 3.5% by weight of the at least one alkaline earth metal element, wherein a suspension of the sorbent material at a solid to liquid ratio of 10 g L$^{-1}$ in an aqueous HCl or NaOH solution with initial pH between 4 and 10 has an equilibrium pH between 7 and 9 after 24h at 20 °C.

13. Sorbent material of claim 12, wherein the sorbent material has a porosity with an average pore size between 0.005 $\mu$m and 50 $\mu$m, preferably between 0.01 $\mu$m and 10 $\mu$m, as measured by mercury intrusion.

14. Sorbent material of claim 12 or 13, having a maximum sorption capacity for phosphate of at least 20 mg g$^{-1}$ in an aqueous PO$_3{}^{4-}$ solution with initial pH = 7 and loading of the sorbent material of 10 g L$^{-1}$ solid to liquid ratio for 24h at 20°C as determined by fitting with a Langmuir isotherm $S = \dfrac{Q_0 bC}{(1+bC)}$ with correlation coefficient R$^2$ = 0.96 or higher, wherein Q$_0$ defines the maximum sorption capacity.

15. A water purification filter, comprising the sorbent material of any one of the claims 12 to 14.

FIG 1

C: Calcite [CaCO$_3$]
F: Fe-monocarbonate
[Ca$_2$Fe(CO$_3$)$_{0.5}$(OH)$_6$(H$_2$O)$_{3.10}$]

FIG 2

FIG 3A

FIG 3B

FIG 4A

FIG 4B

FIG 5A

FIG 5B

FIG 6A

FIG 6B

FIG 7A

FIG 7B

FIG 7C

FIG 8A

FIG 8B

FIG 9A

FIG 9B

FIG 10A

FIG 10B

FIG 10C

FIG 11A

FIG 11B

Europäisches
Patentamt

European
Patent Office

Office européen
des brevets

# EUROPEAN SEARCH REPORT

Application Number

EP 22 21 7235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 203 173 A (CHEN HERAN) 29 May 2020 (2020-05-29) | 1,12 | INV. B01J20/04 |
| Y | * claims 1-8 * | 2-11, 13-15 | B01J20/06 B01J20/08 B01J20/30 |
| X | CA 2 226 024 A1 (WEINBERGER JOHANN [AT]; M & P MACHOWETZ & PARTNER CONS [AT]) 2 July 1998 (1998-07-02) | 1 | B01J20/28 C02F1/28 C02F1/52 |
| Y | * claim 1 * * page 4, line 20 - line 26 * | 2-11 | C02F11/00 C02F11/145 C02F101/10 |
| X | BARCA CRISTIAN ET AL: "Phosphorus removal from wastewater by carbonated bauxite residue under aerobic and anoxic conditions", JOURNAL OF WATER PROCESS ENGINEERING, vol. 39, 1 February 2021 (2021-02-01), page 101757, XP093054146, NL ISSN: 2214-7144, DOI: 10.1016/j.jwpe.2020.101757 | 1,12,15 | B09B3/00 |
| Y | * abstract * * 2.1. Bauxite residue collection and preparation; page 2, left-hand column * * 2.2. Set-up of column experiments; page 2, right-hand column * * figure 1 * | 2-11,13, 14 | TECHNICAL FIELDS SEARCHED (IPC) B01J C02F B09C B09B |

-/--

The present search report has been drawn up for all claims

| Place of search | Date of completion of the search | Examiner |
|---|---|---|
| The Hague | 19 June 2023 | Kaluza, Nicoleta |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................
& : member of the same patent family, corresponding
    document

EPO FORM 1503 03.82 (P04C01)

Europäisches
Patentamt

European
Patent Office

Office européen
des brevets

## EUROPEAN SEARCH REPORT

**Application Number**

EP 22 21 7235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GIULIA COSTA ET AL: "Current status and perspectives of accelerated carbonation processes on municipal waste combustion residues", ENVIRONMENTAL MONITORING AND ASSESSMENT ; AN INTERNATIONAL JOURNAL DEVOTED TO PROGRESS IN THE USE OF MONITORING DATA IN ASSESSINGENVIRONMENTAL RISKS TO MAN AND THE ENVIRONMENT, KLUWER ACADEMIC PUBLISHERS, DO, vol. 135, no. 1-3, 23 May 2007 (2007-05-23), pages 55-75, XP019550923, ISSN: 1573-2959, DOI: 10.1007/S10661-007-9704-4 | 1,12 | |
| Y | * tables 1,2 * * Accelerated carbonation of MSWI BA; page 60, left-hand column * * Accelerated carbonation of APC residues; page 67 * * figure 5 * | 2-11, 13-15 | |
| | ----- | | |
| X | EP 3 757 083 A1 (ORBIX PRODUCTIONS [BE]) 30 December 2020 (2020-12-30) | 1,12 | |
| Y | * paragraph [0044] * * claims 1,5 * | 2-11, 13-15 | |
| | ----- | | |
| A | SHTEPENKO OLGA L. ET AL: "Characterization and Preliminary Assessment of a Sorbent Produced by Accelerated Mineral Carbonation", ENVIRONMENTAL SCIENCE & TECHNOLOGY, vol. 39, no. 1, 23 November 2004 (2004-11-23), pages 345-354, XP093055656, US ISSN: 0013-936X, DOI: 10.1021/es030113t * the whole document * | 1-15 | |
| | ----- | | |

**TECHNICAL FIELDS SEARCHED (IPC)**

The present search report has been drawn up for all claims

| Place of search | Date of completion of the search | Examiner |
|---|---|---|
| The Hague | 19 June 2023 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 7235

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2023

| Patent document cited in search report | | Publication date | Patent family member(s) | | Publication date |
|---|---|---|---|---|---|
| CN 111203173 | A | 29-05-2020 | NONE | | |
| CA 2226024 | A1 | 02-07-1998 | AT | 405830 B | 25-11-1999 |
| | | | CA | 2226024 A1 | 02-07-1998 |
| | | | EP | 0852221 A2 | 08-07-1998 |
| | | | ZA | 9711718 B | 25-06-1998 |
| EP 3757083 | A1 | 30-12-2020 | AU | 2020306874 A1 | 27-01-2022 |
| | | | BR | 112021025873 A2 | 03-03-2022 |
| | | | CA | 3144293 A1 | 30-12-2020 |
| | | | CN | 114007997 A | 01-02-2022 |
| | | | EP | 3757083 A1 | 30-12-2020 |
| | | | EP | 3990414 A1 | 04-05-2022 |
| | | | JP | 2022538101 A | 31-08-2022 |
| | | | US | 2022332654 A1 | 20-10-2022 |
| | | | WO | 2020260568 A1 | 30-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019129767 A
- WO 2019234066 A
- WO 2009133120 A
- EP 3505239 A

**Non-patent literature cited in the description**

- **M. ATEIA ; D.E. HELBLING ; W.R. DICHTEL.** Best Practices for Evaluating New Materials as Adsorbents for Water Treatment. *ACS Materials Letters,* 2020, vol. 2 (11), 1532-1544